# EUROPEAN PATENT SPECIFICATION

(11) **EP 3 888 874 B1**
(45) Date of publication and mention of the grant of the patent: **02.11.2022**
(21) Application number: 21163307.8
(22) Date of filing: 18.03.2021
(51) Int. Cl.: B29C 45/76, B29C 45/77

(54) **INJECTION MOLDING MACHINE AND INJECTION MOLDING SYSTEM**
SPRITZGIESSMASCHINE UND SPRITZGIESSSYSTEM
MACHINE DE MOULAGE PAR INJECTION ET SYSTÈME DE MOULAGE PAR INJECTION

(30) Priority: 31.03.2020 JP 2020062584
(43) Date of publication of application: 06.10.2021
(73) Proprietor: Sumitomo Heavy Industries, Ltd., Tokyo 141-6025 (JP)
(72) Inventor: ONO, Hajime, Chiba-shi, Chiba, 263-0001, (JP)
(74) Representative: Louis Pöhlau Lohrentz

(56) References cited:
- EP-A1- 0 451 298
- EP-A1- 0 664 199
- EP-A1- 3 546 185
- WO-A1-2019/189011
- US-A- 5 225 122
- US-A- 5 595 693
- US-B1- 6 258 303

## Description

### BACKGROUND OF THE INVENTION

### Field of the Invention

The present invention relates to an injection molding machine and an injection molding system.

### Description of Related Art

Japanese Unexamined Patent Publication No. H7-009524 describes an injection molding machine which performs a continuous molding operation based on molding condition data input by an operator on a molding schedule setting mode screen displayed on a display unit. European Patent Publication No. 0664199 discloses a method for editing and setting an injection speed corresponding to the position of an injection screw in an injection molding machine by means of a display screen and a data input device. United States Patent No. 5225122 discloses a method for taking countermeasures against faulty molding in an injection molding machine. United States Patent No. 5595693 discloses a method for automatically setting an injection molding speed condition in an injection molding machine which moves an injection plunger thereby injecting melted material to a mold cavity of a mold. International Patent Publication No. WO2019/189011 (European Patent Publication No. 3778183) discloses an injection molding machine including a controller which performs a drive control of a drive unit and a monitoring control. European Patent Publication No. 0451298 discloses an injection molding condition setting method for an injection molding machine, in which injection molding conditions are set in accordance with accurate information displayed on a display device. United States Patent No. 6258303 discloses an apparatus and a method of monitoring an injection molding machine for molding a disc substrate. European Patent Publication No. 3546185 discloses an injection molding machine including a controller which controls a forward movement or a rearward movement of an ejector rod.

### SUMMARY OF THE INVENTION

Setting molding conditions for an injection molding machine requires skill or experience. Accordingly, the setting can only be performed by a limited number of operators, and it is difficult to continuously secure human resources. Further, the molding conditions are often input step by step to an input screen of the molding conditions, and the steps are limited. Accordingly, it is difficult to set the molding conditions having complicated operations.

One aspect of the present invention is to realize a complicated operation without human intervention.

According to an aspect of the present invention, there is provided an injection molding machine including: a receiving unit which receives position setting information of a movable member based on pressure setting information of the movable member; and a condition setting unit which sets a setting condition of a position of the movable member based on the position setting information.

According to another aspect of the present invention, there is provided an injection molding machine including: a position actual result acquisition unit which acquires position actual result information indicating a relationship between a position of a movable member and a time when a molding product is molded based on preset pressure setting information; and a condition setting unit which sets a setting condition of the position of the movable member based on the position actual result information.

According to still another aspect of the present invention, there is provided an injection molding system including: an injection molding machine having a receiving unit which receives position setting information of the movable member based on pressure setting information of the movable member and a condition setting unit which sets a setting condition of a position of the movable member based on the position setting information; and a management device which transmits the position setting information to an injection molding machine.

According to one aspect of the present invention, a complicated operation can be realized without human intervention.

### BRIEF DESCRIPTION OF THE DRAWINGS

Fig. 1 is a view showing a state when mold opening of an injection molding machine according an embodiment is completed.
Fig. 2 is a view showing a state when a mold of the injection molding machine according to the embodiment is clamped.
Fig. 3 is a diagram showing an example of a system configuration of an injection molding system.
Fig. 4 is a diagram showing functions of an injection molding machine and a management device according to a first embodiment.
Fig. 5 is a first sequence diagram showing an operation of an injection molding system of the first embodiment.
Fig. 6 is a second sequence diagram showing the operation of the injection molding system of the first embodiment.
Fig. 7 is a diagram showing a function of an injection molding machine of a second embodiment.
Fig. 8 is a flowchart showing an operation of the injection molding machine of the second embodiment.

### DETAILED DESCRIPTION OF THE INVENTION

### [First Embodiment]

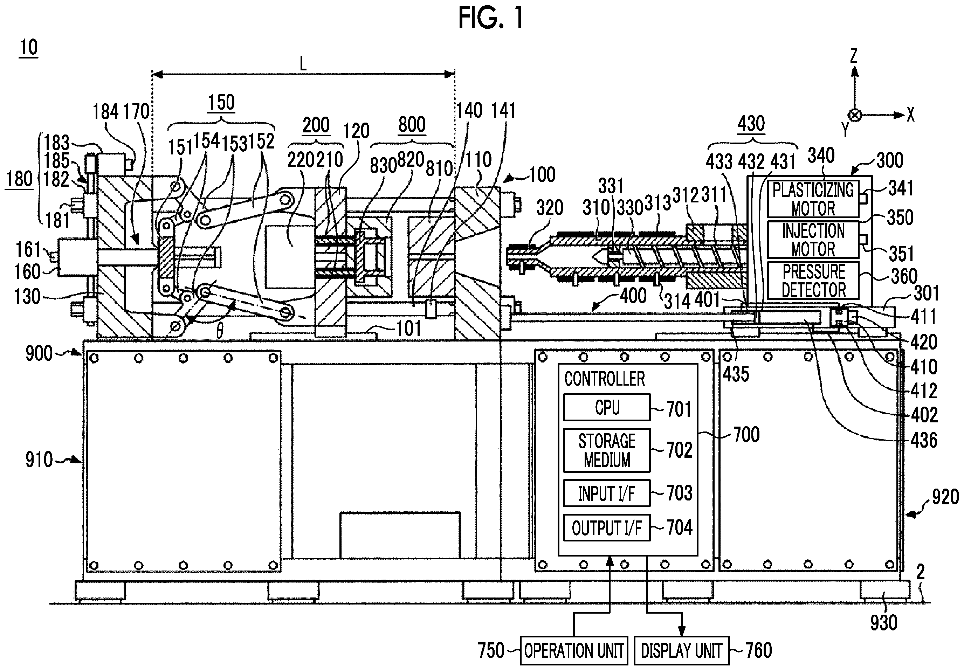

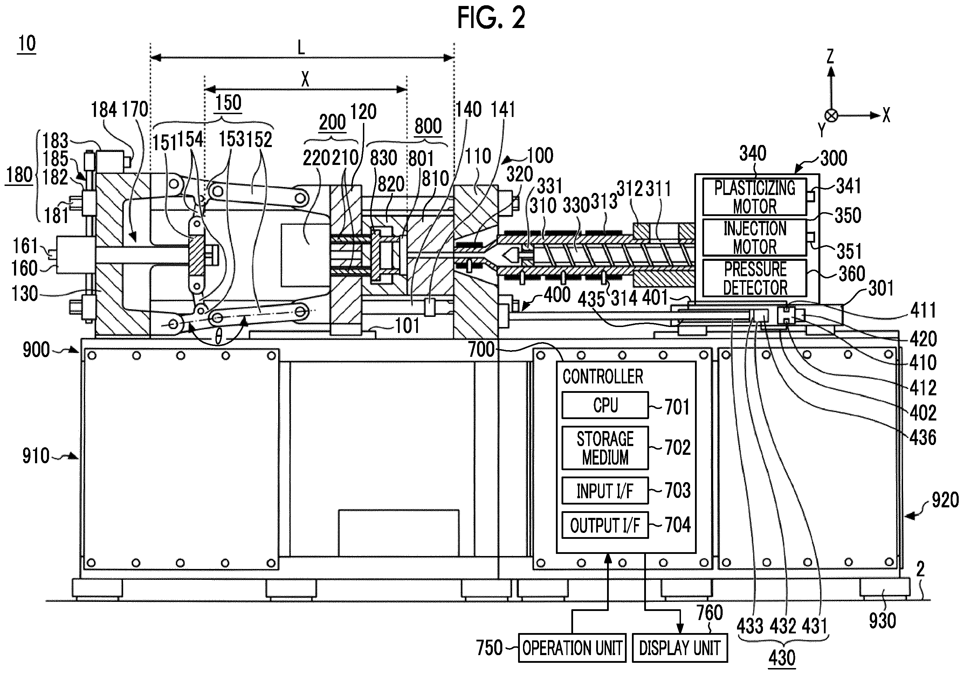

Hereinafter, a first embodiment of the present invention will be described with reference to the drawings. First, an injection molding machine included in an injection molding system of the present embodiment will be described with reference to Figs. 1 and 2.

Fig. 1 is a view showing a state when mold opening of an injection molding machine according an embodiment is completed. Fig. 2 is a view showing a state when a mold of the injection molding machine according to the embodiment is clamped. In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 10. A negative side in the Y-axis direction is referred to as an operation side, and a positive side in the Y-axis direction is referred to as a counter operation side.

As shown in Figs. 1 to 2, the injection molding machine 10 includes the mold clamping unit 100 which openings or closes a mold unit 800, an ejector unit 200 which ejects a molding product molded by the mold unit 800, an injection unit 300 which injects a molding material into the mold unit 800, a moving unit 400 which moves the injection unit 300 forward or rearward with respect to the mold unit 800, a controller 700 which controls each component of the injection molding machine 10, and a frame 900 which supports each component of the injection molding machine 10. The frame 900 includes a mold clamping unit frame 910 which supports the mold clamping unit 100 and an injection unit frame 920 which supports the injection unit 300. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 10 will be described.

### (Mold Clamping Unit)

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is opened is defined as a rear side.

The mold clamping unit 100 performs mold closing, pressurization, mold clamping, depressurization, and mold opening of the mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110 to which a stationary mold 810 is attached, a movable platen 120 to which the movable mold 820 is attached, a toggle support 130 which is disposed at an interval from the stationary platen 110, a tie bar 140 which connects the stationary platen 110 and the toggle support 130 to each other, a toggle mechanism 150 which moves the movable platen 120 in the mold opening and closing directions with respect to the toggle support 130, a mold clamping motor 160 which operates the toggle mechanism 150, a motion conversion mechanism 170 which convert a rotary motion of the mold clamping motor 160 into a linear motion, and a mold space adjustment mechanism 180 which adjusts an interval between the stationary platen 110 and the toggle support 130.

The stationary platen 110 is fixed to the mold clamping unit frame 910. A stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, mold closing, pressurization, mold clamping, depressurization, and mold opening of the mold unit 800 are performed.

The toggle support 130 is disposed at an interval from the stationary platen 110, and is placed on the mold clamping unit frame 910 to be movable in mold opening and closing directions. In addition, the toggle support 130 may be movably disposed along a guide which is placed on the mold clamping unit frame 910. The guide of the toggle support 130 may be also used as the guide 101 of the movable platen 120.

In addition, in the present embodiment, the stationary platen 110 is fixed to the mold clamping unit frame 910, and the toggle support 130 is movably disposed in the mold opening and closing directions with respect to the mold clamping unit frame 910. However, the toggle support 130 may be fixed to the mold clamping unit frame 910, and the stationary platen 110 may be movably disposed in the mold opening and closing directions with respect to the mold clamping unit frame 910.

The stationary platen 110 and the toggle support 130 are connected to each other with an interval L in the mold opening and closing directions by the tie bar 140. A plurality of (for example, four) tie bars 140 may be used. The plurality of tie bars 140 are disposed to be parallel in the mold opening and closing directions and extend according to a mold clamping force . A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151 which moves in the mold opening and closing directions, and a pair of link groups which bends and stretches due to a movement of the crosshead 151. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated.

In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

The number of cavity spaces 801 may be one or more. When a plurality of cavity spaces 801 are provided, a plurality of molding products can be obtained at the same time. An insert material may be disposed in a portion of the cavity space 801 and the other portion of the cavity space 801 may be filled with the molding material. A molding product in which the insert material and the molding material are integrated with each other can be obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are disposed in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are disposed in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed so that a predetermined mold clamping force when the mold is clamped is obtained. For example, in the mold space adjustment, the interval L between the stationary platen 110 and the toggle support 130 is adjusted so that the link angle θ of the toggle mechanism 150 at the time of a mold touch when the movable mold 820 comes into contact with the stationary mold 810 becomes a predetermined angle.

The mold clamping unit 100 has a mold space adjustment mechanism 180. The mold space adjustment mechanism 180 performs the mold space adjustment by adjusting the interval L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a driving gear is attached to an output shaft of the mold space adjustment motor 183, and an intermediate gear which engages with a plurality of driven gears and driving gears is rotatably held by a central portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the interval L between the stationary platen 110 and the toggle support 130 is adjusted. In addition, a plurality of mold space adjustment mechanisms may be used in combination.

The interval L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the interval L. In addition, a toggle support position detector which detects the position of the toggle support 130 and an interval detector which detects the interval L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, X-axis positive direction) of the movable platen 120 when the mold is closed is defined as the front side, and the movement direction (for example, X-axis negative direction) of the movable platen 120 when the mold is opened is defined as the rear side.

The ejector unit 200 is attached to the movable platen 120 and moves forward and rearward together with the movable platen 120. The ejector unit 200 includes an ejector rod 210 which ejects the molding product from the mold unit 800, and a drive mechanism 220 which moves the ejector rod 210 in a movement direction (X-axis direction) of the movable platen 120.

The ejector rod 210 is disposed to be movable forward or rearward through a through-hole of the movable platen 120. A front end portion of the ejector rod 210 comes into contact with a movable member 830 which is disposed to be movable forward or rearward inside the movable mold 820. The front end portion of the ejector rod 210 may be connected to the movable member 830 or may not be connected to the movable member 830.

For example, the drive mechanism 220 includes an ejector motor and a motion conversion mechanism that converts a rotary motion of the ejector motor into a linear motion of the ejector rod 210. The motion conversion mechanism includes a screw shaft and a screw nut which is screwed to the screw shaft. A ball or a roller may be interposed between the screw shaft and the screw nut.

The ejector unit 200 performs an ejection process under the control of the controller 700. In the ejection process, the ejector rod 210 is moved forward from a standby position to an ejection position at a set movement speed, and thus, the movable member 830 moves forward and the molding product is ejected. Thereafter, the ejector motor is driven to move the ejector rod 210 rearward at a set movement speed, and thus, the movable member 830 moves rearward to an original standby position.

For example, a position or movement speed of the ejector rod 210 is detected using an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, X-axis negative direction) of a screw 330 during filling is referred to as a front side, and a movement direction (for example, X-axis positive direction) of the screw 330 during plasticizing is referred to as a rear side.

The injection unit 300 is installed on a slide base 301, and the slide base 301 is disposed so as to be movable forward or rearward with respect to the injection unit frame 920. The injection unit 300 is disposed to be movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310 which heats a molding material, a nozzle 320 which is provided on a front end portion of the cylinder 310, a screw 330 which is disposed to be movable forward or rearward and rotatable in the cylinder 310, a plasticizing motor 340 which rotates the screw 330, an injection motor 350 which moves the screw 330 forward or rearward, and a pressure detector 360 which detects a force transmitted between the injection motor 350 and the screw 330.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed in a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on the front end portion of the cylinder 310 and presses the mold unit 800. The heating unit 313 and the temperature measurer 314 are provided on an outer periphery of the nozzle 320. The controller 700 controls the heating unit 313 so that a detection temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front portion of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are disposed in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are disposed in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a setting pressure or less, the screw 330 moves forward at the set movement speed. Meanwhile, in a case where the detection value of the pressure detector 360 exceeds the setting pressure, in order to protect the mold, the screw 330 moves forward at a movement speed slower than the set movement speed so that the detection value of the pressure detector 360 is the setting pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Moving Unit)

Similarly to the descriptions of the injection unit 300, in descriptions of the moving unit 400, the movement direction (for example, X-axis negative direction) of the screw 330 during filling is referred to as a front side, and the movement direction (for example, X-axis positive direction) of the screw 330 during plasticizing is referred to as a rear side.

The moving unit 400 moves the injection unit 300 rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed against the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot

is also referred to as a "molding cycle time" or a "cycle time".

For example, the once molding cycle includes the plasticizing process, the mold closing process, the pressurization process, the mold clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process. The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the molding closing process. Moreover, the ejection process may be performed the mold opening process. In a case where an on/off valve which opens or closes the flow path of the nozzle 320 is provided, the mold opening process may be performed during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and it is possible to prevent the molding material from leaking from the nozzle 320 before the filling process starts.

The controller 700 is connected to an operation unit 750 which receives input operations by a user and a display unit 760 which displays a display screen. For example, the operation unit 750 and the display unit 760 may include a touch panel to be integrated with each other. The touch panel as the display unit 760 displays the display screen under the control of the controller 700. For example, information such as setting of the injection molding machine 10 and a current state of the injection molding machine 10 may be displayed on the display screen of the touch panel. Further, for example, an input operation unit such as a button which receives an input operation by the user or an input field may be displayed on the display screen of the touch panel. The touch panel as the operation unit 750 detects the input operation on the display screen by the user and outputs a signal corresponding to the input operation to the controller 700. As a result, for example, the user operates the input operation unit provided on the display screen while checking the information displayed on the display screen, and thus, can set the injection molding machine 10 (including inputting the set value) or the like. Further, the user operates the input operation unit provided on the display screen, and thus, can operate the injection molding machine 10 corresponding to the input operation unit. Moreover, for example, the operation of the injection molding machine 10 may be an operation (including stopping) of the mold clamping unit 100, the ejector unit 200, the injection unit 300, the moving unit 400, or the like. Further, the operation of the injection molding machine 10 may be switching of the display screen displayed on the touch panel as the display unit 760.

In addition, although the operation unit 750 and the display unit 760 of the present embodiment are described as being integrated as a touch panel, the operation unit 750 and the display unit 760 may be provided independently. In addition, a plurality of the operation units 750 may be provided. The operation unit 750 and the display unit 760 are disposed on an operation side (Y-axis negative direction) of the mold clamping unit 100 (more specifically, the stationary platen 110).

### (Injection Molding System)

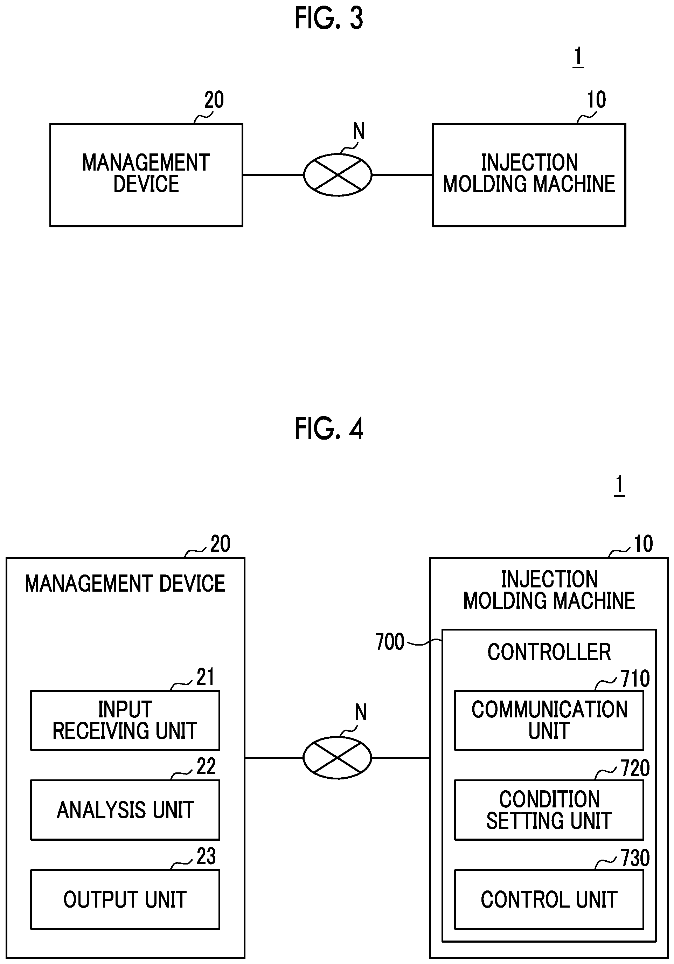

The injection molding system including the injection molding machine 10 will be described below with reference to Fig. 3. Fig. 3 is a diagram showing an example of a system configuration of the injection molding system.

An injection molding system 1 of the present embodiment includes the injection molding machine 10 and a management device 20. For example, the injection molding machine 10 and the management device 20 are communicably connected to each other via a network N or the like. For example, the network N is a Local Area Network (LAN), the Internet, or the like. Further, the communication between the injection molding machine 10 and the management device 20 may be wireless communication or wired communication as long as data can be exchanged. Moreover, the injection molding machine 10 and the management device 20 may communicate with each other without going through the network N.

Further, in the example of Fig. 3, the number of injection molding machines 10 included in the injection molding system 1 is one, but the number of injection molding machines 10 included in the injection molding system 1 is not limited. The injection molding system 1 may include an arbitrary number of injection molding machines 10.

For example, the management device 20 of the present embodiment is a computer having a calculation processing device such as a Central Processing Unit (CPU), and a storage device such as a Read Only Memory (ROM) and Random access memory (RAM) .

For example, the management device 20 of the present embodiment transmits position setting information indicating a relationship between a position of the screw 330 and a time in one molding cycle of the injection molding machine 10 to the injection molding machine 10, and causes the injection molding machine 10 to mold a molding product based on the position setting information.

Further, when the injection molding machine 10 of the present embodiment receives the position setting information from the management device 20, the injection molding machine 10 sets a setting condition of the position of the screw 330 based on the received position setting information and controls the position of the screw 330 based on this setting condition to mold the molding product.

Next, functions of the injection molding machine 10 and the management device 20 included in the injection molding system 1 will be described with reference to Fig. 4.

Fig. 4 is a diagram showing functions of an injection molding machine and a management device according to a first embodiment. The controller 700 of the injection molding machine 10 of the present embodiment includes a communication unit 710, a condition setting unit 720, and a control unit 730. For example, the communication unit 710, the condition setting unit 720, and the control unit 730 are realized by the CPU 701 of the controller 700 reading and executing the program stored in the storage medium 702.

The communication unit 710 transmits or receives information to or from the management device 20. Specifically, the communication unit 710 is an example of a receiving unit which receives the position setting information transmitted from the management device 20. Further, the communication unit 710 is an example of a receiving unit which receives the position setting information corrected by the management device 20 from the management device 20.

The condition setting unit 720 sets a series of setting conditions indicating the position of the screw 330 in one molding cycle based on the position setting information received by the communication unit 710. Specifically, the condition setting unit 720 sets a condition in which the position and timing of the screw 330 are associated with each other. Setting the setting condition of the position based on the position setting information means that the position setting information indicating the relationship between the position and the time is set as it is as the setting condition of the position.

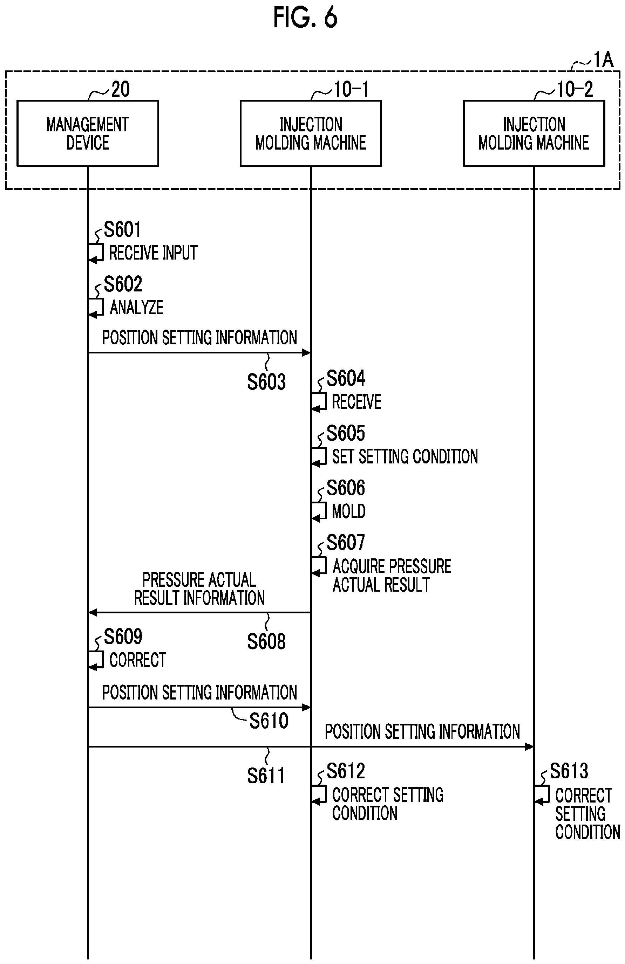

Further, the condition setting unit 720 sets a series of setting conditions indicating the position of the screw 330 in the management device 20 based on the corrected position setting information. Details of the correction of the position setting information by the management device 20 will be described later with reference to Fig. 6.

For example, the position of the screw 330 set as the setting condition includes the plasticizing start position, the rotating speed switching position, and the plasticizing completion position in the plasticizing process. Further, the position of the screw 330 set as the setting condition includes the filling start position (also referred to as the "injection start position") and the movement speed switching position in the filling process. Further, for example, the position of the screw 330 set as the setting condition includes the position of the screw 330 in the holding pressure process after the position of the screw 330 reaches the V/P switching position in the filling process.

That is, in the present embodiment, the injection molding machine 10 controls the holding pressure by controlling the position of the screw 330 even in the holding pressure process.

The control unit 730 controls the position of the screw 330 based on the setting condition of the position set by the condition setting unit 720 to mold the molding product.

The management device 20 of the present embodiment has an input receiving unit 21, an analysis unit 22, and an output unit 23. The input receiving unit 21 of the present embodiment receives an input with respect to the management device 20.

Specifically, the input receiving unit 21 receives an input of analysis target information analyzed by the analysis unit 22.

The analysis unit 22 analyzes the information input from the input receiving unit 21 and outputs the position setting information indicating the relationship between the position of the screw 330 and the time in one molding cycle as the analysis result. Details of the analysis unit 22 will be described later.

Moreover, in the present embodiment, the position setting information is information indicating the position of the screw 330 in one molding cycle, but the position setting information is not limited to this. The position setting information may be information indicating the relationship between the position of the screw 330 and the time in some of processes included in one molding cycle.

Further, the position setting information of the present embodiment may be information indicating a relationship between the position of the crosshead 151 of the mold clamping unit 100 or the movable platen 120 and the time in one molding cycle or some of the processes included in one molding cycle, or information indicating a relationship between the position of the ejector rod 210 of the ejector unit 200 and the time.

The output unit 23 outputs (transmits) the position setting information, which is the analysis result acquired by the analysis unit 22, to the injection molding machine 10.

Hereinafter, the input received by the input receiving unit 21 and the analysis performed by the analysis unit 22 will be described.

For example, the input receiving unit 21 of the present embodiment receives an input of pressure setting information indicating the pressure setting condition of the screw 330. The pressure setting information includes a set value of the pressure of the screw 330.

The analysis unit 22 analyzes the pressure setting information received by the input receiving unit 21, and when the injection molding machine 10 molds the molding product, the analysis unit 22 derives a position of the screw 330 and a timing when the pressure detected using the pressure detector 360 becomes a set value.

The analysis unit 22 outputs the result derived in this way to the output unit 23 as the position setting information indicating the relationship between the position of the screw 330 and the time.

The analysis unit 22 of the present embodiment may output the position setting information as waveform data indicating the relationship between the position of the screw 330 and the time.

When the injection molding machine receives the waveform data, the injection molding machine 10 sets the setting condition of the position of the screw 330 based on the relationship between the position and the time indicated by the waveform data, and moves the screw 330 according to the setting condition of the position.

Further, instead of the pressure setting information, the input receiving unit 21 may receive, as the input, pressure actual result information indicating an actual result of a pressure when the molding product is molded by the injection molding machine 10. The pressure actual result information is information indicating a pressure of the screw 330 for one molding cycle detected by using the pressure detector 360 when the molding product is molded by the injection molding machine 10.

In this case, the analysis unit 22 analyzes the pressure actual result information, derives the position setting information, and outputs the position setting information to the output unit 23.

Further, the analysis unit 22 analyzes the pressure setting information of the screw 330 received by the input receiving unit 21, and may derive position and timing of the mold clamping unit 100 at which the detected mold clamping force become the set value in the molding of the molding product performed by the injection molding machine 10. In that case, the analysis unit 22 may output the relationship between the position of the mold clamping unit 100 and the time as the waveform data.

In the injection molding machine 10, when the communication unit 710 receives the waveform data which is the position setting information of the mold clamping unit 100, the condition setting unit 720 sets the setting condition of the position of the mold clamping unit 100 based on the position setting information.

Further, the analysis unit 22 may analyze the pressure setting information of the screw 330 received by the input receiving unit 21 and derive position and timing of the ejector rod 210 in the molding the molding product performed by the injection molding machine 10. In this case, the analysis unit 22 may output the relationship between the position of the ejector unit 200 and the time as the waveform data.

In the injection molding machine 10, when the communication unit 710 receives the waveform data which is the position setting information of the ejector unit 200, the condition setting unit 720 sets the position setting condition of the ejector unit 200 based on the position setting information.

Further, the analysis unit 22 may analyze the pressure setting information of the screw 330 received by the input receiving unit 21 and derive the positions of the mold clamping unit 100 and the ejector unit 200 and the time in the molding of the molding product performed by the injection molding machine 10. In this case, the analysis unit 22 may output the relationship between the position of each of the mold clamping unit 100 and the ejector unit 200 and the time as the waveform data.

In the injection molding machine 10, when the communication unit 710 receives the waveform data which is the position setting information of the mold clamping unit 100 and the ejector unit 200, the condition setting unit 720 sets the setting condition of the position of the mold clamping unit 100 and the setting condition of the position of the ejector unit 200 based on the position setting information of each unit.

As described above, in the present embodiment, when the screw 330 is a first movable member and the mold clamping unit 100 and the ejector unit 200 are second movable members, the injection molding machine 10 acquires a second position setting information of a result obtained by analyzing pressure setting information of the first movable member by the management device 20.

Then, the injection molding machine 10 sets a setting condition of a position of the second movable member based on the second position setting information.

Further, the input receiving unit 21 may receive an input of information indicating a shape of the cavity space 801. In this case, the analysis unit 22 analyzes the information indicating the shape of the cavity space 801 and derives a relationship between an amount of resin filling the cavity space 801 and a time elapsed from a start of injection. Then, the analysis unit 22 outputs the position setting information based on the derived relationship.

Further, the input receiving unit 21 may receive information indicating a type of the resin filling the cavity space 801 and information indicating specifications of the injection molding machine 10 together with information indicating the shape of the cavity space 801. Further, the input receiving unit 21 may input a condition of the analysis together with the information indicating the shape of the cavity space 801.

For example, the condition of the analysis is that the flow velocity of a tip of the resin filling the cavity space 801 is constant. In this case, the analysis unit 22 generates waveform data indicating the relationship between the position of the screw 330 and the time in order to keep a flow velocity of the tip of the resin constant, based on the information indicating the shape of the cavity space 801.

In the present embodiment, by keeping the flow velocity of the tip of the resin constant in the filling process, it is possible to mold the molding product without impairing an appearance thereof even if the molding product has a complicated shape having irregularities.

Further, the condition of the analysis may be that an internal pressure of an inlet (gate) in the cavity space 801 is constant, a temperature inside the cavity space 801 is constant, or the like.

The condition of the analysis input to the analysis unit 22 are not limited to those described above. The condition of the analysis may be set according to the shape of the molding product, the specifications of the injection molding machine 10, or the like, and may be conditions other than the above-mentioned conditions.

Further, for example, the analysis unit 22 of the present embodiment may function as a learning unit which performs machine learning. In this case, for example, the input receiving unit 21 receives an input of information in which the pressure setting information is associated with the image data indicating an image of the molding product molded based on the pressure setting information.

The analysis unit 22 may perform the machine learning using the information received by the input receiving unit 21 to generate and hold a learning model indicating a relationship between the pressure setting information and the shape of the molding product.

When the image data indicating the image of the molding product is input from the input receiving unit 21 to the analysis unit 22, the analysis unit 22 estimates optimum pressure setting information using the learning model, and may output the position setting information based on the estimated pressure setting information.

Moreover, the learning model described above may be generated by a device other than the management device 20, and in this case, the analysis unit 22 may hold the learning model.

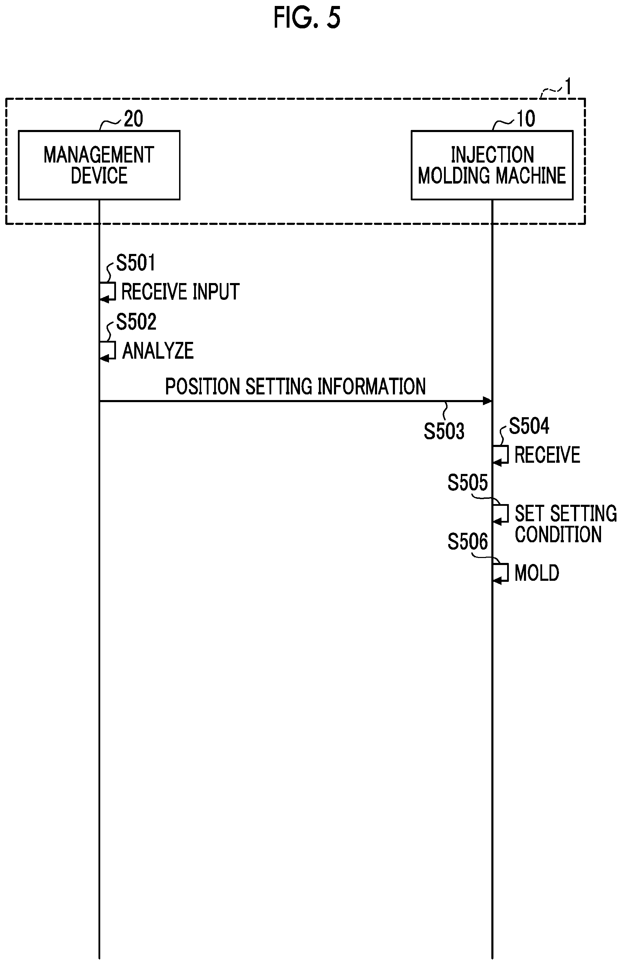

Next, an operation of the injection molding system 1 will be described with reference to Fig. 5. Fig. 5 is a first sequence diagram showing the operation of the injection molding system of the first embodiment.

In the injection molding system 1 of the present embodiment, in the management device 20, the input receiving unit 21 receives an input (Step S501).

Subsequently, the management device 20 performs analysis using the information received by the input receiving unit 21 (Step S502), and the output unit 23 transmits the position setting information of the analysis result to the injection molding machine 10 (Step S503).

In the injection molding machine 10, when the communication unit 710 of the controller 700 receives the position setting information (Step S504), the condition setting unit 720 sets the setting condition of the position of the screw 330 based on the position setting information (Step S505).

Subsequently, in the injection molding machine 10, the control unit 730 controls the position of the screw 330 based on the setting condition of the position to mold the molding product (Step S506).

In Fig. 5, the process from receiving the position setting information in the injection molding machine 10 to the molding is described as a series of processing, but the present invention is not limited to this. For example, in the injection molding system 1, in the injection molding machine 10, the processing up to the processing (Step S505) of setting the setting condition of the position may be performed independently of the processing of molding the molding product as pre-processing before molding the molding product.

As described above, in the present embodiment, in the injection molding machine 10, the setting condition of the position is set based on the position setting information input from the outside (management device 20). Therefore, in the present embodiment, a series of setting conditions for controlling the position of the screw 330 can be set without human intervention. That is, according to the present embodiment, the injection molding machine 10 can perform a complicated operation without human intervention.

Further, in the present embodiment, the screw 330 may be moved based on the setting condition of the position in both the filling process and the holding pressure process. In other words, in the present embodiment, the position and movement speed of the screw 330 may be controlled based on the setting condition of the position even in the holding pressure process.

Further, in the present embodiment, the position and movement speed of the screw 330 are controlled based on the setting condition of the position. Therefore, in the present embodiment, particularly in fine adjustment of the position of the screw 330, the control is easier as compared with the case where the position of the screw 330 is controlled based on the setting condition of the pressure.

In the present embodiment, the control may be performed based on the setting condition of the position in some processes included in the holding pressure process, and the control may be performed based on the setting condition of the pressure in other processes.

Further, in the injection molding system 1 of the present embodiment, the injection molding machine 10 may acquire the pressure actual result information when molding the molding product based on the setting condition of the position via the pressure detector 360, and may transmit this pressure actual result information to the management device 20.

When the management device 20 receives the pressure actual result information from the injection molding machine 10 which is a transmission destination of the position setting information, the management device 20 may compare the pressure actual result information with the pressure setting information received by the input receiving unit 21 using the analysis unit 22 and correct the position setting information so that a difference therebetween is minimized. Then, the management device 20 may transmit the corrected position setting information to the injection molding machine 10 and cause the injection molding machine 10 to set the corrected position setting condition based on the corrected position setting information.

Further, when a plurality of the injection molding machines 10 are included in the injection molding system 1 of the present embodiment, the management device 20 may transmit the position setting information to each injection molding machine 10. Moreover, specifications of the plurality of injection molding machines 10 are the same as each other.

Hereinafter, in an injection molding system 1A, an operation when the management device 20 transmits the corrected position setting information to the plurality of injection molding machines 10 will be described with reference to Fig. 6.

Fig. 6 is a second sequence diagram showing the operation of the injection molding system of the first embodiment. In the example of Fig. 6, it is assumed that the injection molding system 1 includes an injection molding machine 10-1 and an injection molding machine 10-2.

Since the processing from Step S601 to Step S606 in Fig. 6 is the same as the processing from Steps S501 to S506 in Fig. 5, descriptions thereof will be omitted.

In Step S606, when the injection molding machine 10-1 completes molding of the molding product based on the setting condition of the position, the pressure actual result information of one molding cycle is acquired (Step S607). Subsequently, in the injection molding machine 10-1 the communication unit 710 transmits the pressure actual result information to the management device 20 (Step S608).

When the management device 20 receives the pressure actual result information, the analysis unit 22 corrects the position setting information acquired as the analysis result in Step S602 based on the difference between the pressure actual result information and the pressure setting information, and acquires the corrected position setting information (Step S609).

Specifically, when there is a difference between a set value at each time point indicated by the pressure setting information and a pressure at each time point indicated by the pressure actual result information, the analysis unit 22 derives the waveform data obtained by correcting the relationship between the position of the screw 330 and the time so that the pressure indicated by the pressure actual result information approaches the set value.

Subsequently, in the management device 20, the output unit 23 transmits the corrected position setting information acquired in Step S609 to the injection molding machine 10-1 and the injection molding machine 10-2 (Steps S610 and 611).

When the injection molding machine 10-1 receives the corrected position setting information, the injection molding machine 10-1 corrects the setting condition of the position based on the corrected position setting information (Step S612).

The injection molding machine 10-2 sets the setting condition of the position based on the corrected position setting information (Step S613).

As described above, in the injection molding system 1, the position setting information can be corrected based on the actual result of the pressure detected when the molding product is molded based on the position setting information obtained by the processing of the analysis unit 22.

Therefore, according to the present embodiment, the position setting information first obtained by the analysis unit 22 can be corrected according to the operation of the injection molding machine 10, and accuracy of the position setting information can be improved. In other words, by controlling the position of the screw 330 based on the position setting information, the pressure detected via the pressure detector 360 can be brought close to the set value.

Moreover, in the example of Fig. 6, the analysis unit 22 corrects the position setting information by using the difference between the pressure actual result information acquired in Step S607 and the input pressure setting information, but the present invention is not limited to this. For example, the analysis unit 22 may newly derive the position setting information based on the pressure actual result information acquired in Step S607, and the position setting information derived from the pressure actual result information may be used as the corrected position setting information.

Further, in the present embodiment, the correction of the position setting information by the analysis unit 22 may be repeated a plurality of times. By repeating the correction, the accuracy of the position setting information can be improved.

Further, according to the present embodiment, the management device 20 can transmit the position setting information to the plurality of injection molding machines 10, and the setting conditions of the position can be set for the plurality of injection molding machines 10 at a time.

In addition, in the present embodiment, the injection molding machine 10 receives the position setting information from the management device 20, but the method of acquiring the position setting information by the injection molding machine 10 is not limited to this. For example, the management device 20 stores the position setting information in a portable recording medium such as a USB memory (Universal Serial Bus), and the injection molding machine 10 reads the position setting information from the recording medium to obtain the position setting information.

Further, in the present embodiment, the analysis unit 22 is provided in the management device 20, but the present invention is not limited to this. For example, the analysis unit 22 may be provided in the controller 700 of the injection molding machine 10. In this case, in the plurality of injection molding machines 10 included in the injection molding system 1, the injection molding machine 10 having the analysis unit 22 may also serve as the management device 20.

### [Second Embodiment]

Hereinafter, a second embodiment of the present invention will be described with reference to the drawings. The second embodiment differs from the first embodiment in that the injection molding machine 10 sets the position setting information based on the position of the screw 330 detected when molding the molding product by the own machine. In the second embodiment below, differences from the first embodiment will be described.

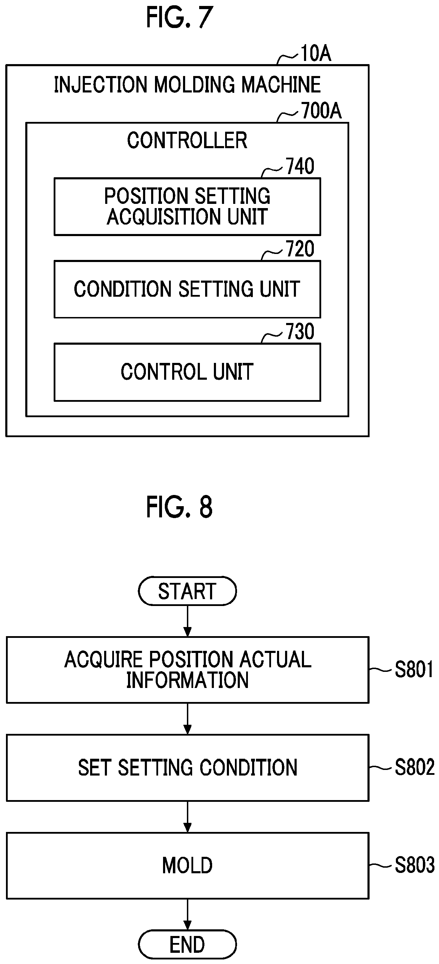

Fig. 7 is a diagram showing a function of an injection molding machine of the second embodiment. The injection molding machine 10A of the present embodiment has a controller 700A.

The controller 700A of the present embodiment has a position actual result acquisition unit 740, the condition setting unit 720, and the control unit 730.

The position actual result acquisition unit 740 of the present embodiment acquires position actual result information indicating the relationship between the position of the screw 330 and the time detected by the injection motor encoder 351 when the molding product is molded in the injection molding machine 10A.

Here, the position of the screw 330 acquired by the position actual result acquisition unit 740 is a position of the screw 330 when the screw 330 is controlled based on the setting condition of the pressure and the pressure detected by the pressure detector 360 becomes a set value indicated by the setting condition of the pressure.

For example, the position actual result information of the present embodiment may be information obtained by associating the position of the screw 330 detected by the injection motor encoder 351 with the time (time when the injection motor encoder 351 outputs a signal to the controller 700A) when the position of the screw 330 is detected.

When the position actual result acquisition unit 740 of the present embodiment acquires the position actual result information, the position actual result acquisition unit 740 outputs the position actual result information to the condition setting unit 720.

The condition setting unit 720 sets the setting condition of the position of the screw 330 based on the position actual result information.

Next, an operation of the injection molding machine 10A of the present embodiment will be described with reference to Fig. 8. Fig. 8 is a flowchart showing an operation of the injection molding machine of the second embodiment.

In the controller 700A of the injection molding machine 10A of the present embodiment, when the molding of the molding product is completed, the position actual result acquisition unit 740 acquires the position actual result information for one molding cycle (Step S801).

Subsequently, in the controller 700A, the condition setting unit 720 sets the setting condition of the position of the screw 330 based on the position actual result information (Step S802) . Setting the setting condition of the position of the screw 330 based on the position actual result information means setting the position actual result information as it is as the setting condition of the position.

Subsequently, in the controller 700A, the control unit 730 controls the position of the screw 330 based on the setting condition of the position to mold the molding product (Step S803) .

As described above, the injection molding machine 10A of the present embodiment sets the setting condition of the position based on the position actual result information when the molding product is molded by the own machine.

Therefore, in the present embodiment, after the molding product is molded once, the setting condition of the position can be set without human intervention.

Moreover, in the present embodiment, the position actual result acquisition unit 740 acquires the position actual result information based on the position of the screw 330 detected by the own machine. However, the present invention is not limited to this. For example, the position actual result information may be information acquired when the molding product is molded by an injection molding machine 10 other than the injection molding machine 10A. In this case, preferably, the injection molding machine 10 other than the injection molding machine 10A has the same specifications as those of the injection molding machine 10A.

Hereinbefore, the preferred embodiments of the present invention are described in detail. However, the present invention is not limited to the above-described embodiments, and various modifications and substitutions can be applied the above-described embodiments without departing from a scope of the present invention.

### Brief Description of the Reference Symbols

- 10:: injection molding machine
- 20:: management device
- 21:: input receiving unit
- 22:: analysis unit
- 23:: output unit
- 100:: mold clamping unit
- 110:: stationary platen
- 120:: movable platen
- 150:: toggle mechanism
- 151:: crosshead
- 130:: toggle support
- 200:: ejector unit
- 300:: injection unit
- 400:: moving unit
- 700:: controller
- 710:: communication unit
- 720:: condition setting unit
- 730:: control unit

## Claims

1. An injection molding machine (10) **characterized by** comprising:
a receiving unit (710) configured to receive position setting information of a movable member (830) based on pressure setting information of the movable member (830); and
a condition setting unit (720) configured to set a setting condition of a position of the movable member (830) based on the position setting information.

2. The injection molding machine (10) according to claim 1,
wherein the pressure setting information is pressure setting information of a first movable member (330),
the position setting information is position setting information of a second movable member (100, 200) based on the pressure setting information of the first movable member (330), and
the condition setting unit (720) sets a setting condition of a position of the second movable member (100, 200) based on the position setting information.

3. An injection molding machine (10) **characterized by** comprising:
a position actual result acquisition unit (740) configured to acquire position actual result information indicating a relationship between a position of a movable member (830) and a time when a molding product is molded based on preset pressure setting information; and
a condition setting unit (720) configured to set a setting condition of the position of the movable member (830) based on the position actual result information.

4. An injection molding system (1) **characterized by** comprising:
a receiving unit (710) configured to receive position setting information of a movable member (830) based on pressure setting information of the movable member (830);
a condition setting unit (720) configured to set a setting condition of a position of the movable member (830) based on the position setting information; and
a management device (5) configured to transmit the position setting information to an injection molding machine (10) .

5. The injection molding system (1) according to claim 4,
wherein the pressure setting information is pressure setting information of a first movable member (330),
the position setting information is position setting information of a second movable member (100, 200) based on the pressure setting information of the first movable member (330), and
the condition setting unit (720) sets a setting condition of a position of the second movable member (100, 200) based on the position setting information.

6. The injection molding system (1) according to claim 4 or 5,
wherein the management device (5) includes an analysis unit (22) which analyzes the pressure setting information and outputs the position setting information.

7. The injection molding system (1) according to claim 4 or 5,
wherein the management device (5) includes an analysis unit (22) which analyzes pressure actual result information indicating a pressure detected when a molding product is molded and outputs the position setting information.

8. The injection molding system (1) according to claim 6 or 7,
wherein the analysis unit (22) corrects the position setting information based on pressure actual result information indicating a pressure detected when a molding product is molded and the pressure setting information, and
the receiving unit (710) receives the corrected position setting information.

## Patentansprüche

1. Spritzgießmaschine (10), **dadurch gekennzeichnet, dass** sie umfasst:
eine Empfangseinheit (710), die konfiguriert ist, Positionseinstellinformationen eines beweglichen Elements (830) basierend auf Druckeinstellinformationen des beweglichen Elements (830) zu empfangen; und
eine Bedingungseinstelleinheit (720), die konfiguriert ist, eine Einstellbedingung einer Position des beweglichen Elements (830) basierend auf den Positionseinstellinformationen einzustellen.

2. Spritzgießmaschine (10) gemäß Anspruch 1,
wobei die Druckeinstellinformationen Druckeinstellinformationen eines ersten beweglichen Elements (330) sind,
die Positionseinstellinformationen Positionseinstellinformationen eines zweiten beweglichen Elements (100, 200) basierend auf den Druckeinstellinformationen des ersten beweglichen Elements (330) sind, und
die Bedingungseinstelleinheit (720) eine Einstellbedingung einer Position des zweiten beweglichen Elements (100, 200) basierend auf den Positionseinstellinformationen einstellt.

3. Spritzgießmaschine (10), **dadurch gekennzeichnet, dass** sie umfasst:
eine Positions-Ist-Ergebnis-Erfassungseinheit (740), die konfiguriert ist, Positions-Ist-Ergebnis-Informationen zu erfassen, die eine Beziehung zwischen einer Position eines beweglichen Elements (830) und einer Zeit, wenn ein Formprodukt geformt wird, basierend auf voreingestellten Druckeinstellinformationen angeben; und
eine Bedingungseinstelleinheit (720), die konfiguriert ist, eine Einstellbedingung der Position des beweglichen Elements (830) basierend auf den Position-Ist-Ergebnisinformationen einzustellen.

4. Spritzgießsystem (1), **dadurch gekennzeichnet, dass** es umfasst:
eine Empfangseinheit (710), die konfiguriert ist, Positionseinstellinformationen eines beweglichen Elements (830) basierend auf Druckeinstellinformationen des beweglichen Elements (830) zu empfangen;
eine Bedingungseinstelleinheit (720), die konfiguriert ist, eine Einstellbedingung einer Position des beweglichen Elements (830) basierend auf den Positionseinstellinformationen einzustellen; und
eine Verwaltungsvorrichtung (5), die konfiguriert ist, die Positionseinstellinformationen an eine Spritzgießmaschine (10) zu übertragen.

5. Spritzgießsystem (1) gemäß Anspruch 4,
wobei die Druckeinstellinformationen Druckeinstellinformationen eines ersten beweglichen Elements (330) sind,
die Positionseinstellinformationen Positionseinstellinformationen eines zweiten beweglichen Elements (100, 200) basierend auf den Druckeinstellinformationen des ersten beweglichen Elements (330) sind, und
die Bedingungseinstelleinheit (720) eine Einstellbedingung einer Position des zweiten beweglichen Elements (100, 200) basierend auf den Positionseinstellinformationen einstellt.

6. Spritzgießsystem (1) gemäß Anspruch 4 oder 5,
wobei die Verwaltungsvorrichtung (5) eine Analyseeinheit (22) umfasst, die die Druckeinstellinformationen analysiert und die Positionseinstellinformationen ausgibt.

7. Spritzgießsystem (1) gemäß Anspruch 4 oder 5,
wobei die Verwaltungsvorrichtung (5) eine Analyseeinheit (22) umfasst, die Druck-Ist-Ergebnis-Informationen analysiert, die einen Druck angeben, der detektiert wird, wenn ein Formprodukt geformt wird, und die Positionseinstellinformationen ausgibt.

8. Spritzgießsystem (1) gemäß Anspruch 6 oder 7,
wobei die Analyseeinheit (22) die Positionseinstellinformationen, basierend auf Druck-Ist-Ergebnis-Informationen, die einen Druck angeben, der detektiert wird, wenn ein Formprodukt geformt wird, und die Druckeinstellinformationen korrigiert, und
die Empfangseinheit (710) die korrigierten Positionseinstellinformationen empfängt.

## Revendications

1. Une machine de moulage par injection (10) **caractérisée en ce qu'**elle comprend :
une unité de réception (710) configurée pour recevoir des informations de définition de position d'un élément mobile (830) basées sur des informations de définition de pression de l'élément mobile (830) ; et
une unité de définition de condition (720) configurée pour déterminer une condition de définition d'une position de l'élément mobile (830) sur la base des informations de définition de position.

2. La machine de moulage par injection (10) selon la revendication 1,
dans laquelle les informations de définition de pression sont des informations de définition de pression d'un premier élément mobile (330),
les informations de définition de position sont des informations de définition de position d'un second élément mobile (100, 200) basées sur les informations de définition de pression du premier élément mobile (330), et
l'unité de définition de condition (720) définit une condition de définition d'une position du second élément mobile (100, 200) sur la base des informations de définition de position.

3. Une machine de moulage par injection (10) **caractérisée en ce qu'**elle comprend :
une unité d'acquisition de résultat réel de position (740) configurée pour acquérir des informations de résultat réel de position indiquant une relation entre une position d'un élément mobile (830) et un moment où un produit de moulage est moulé sur la base d'informations de définition de pression prédéfinies ; et
une unité de définition de condition (720) configurée pour déterminer une condition de définition de la position de l'élément mobile (830) sur la base des informations de résultat réel de position.

4. Un système de moulage par injection (1) **caractérisé en ce qu'**il comprend :
une unité de réception (710) configurée pour recevoir des informations de définition de position d'un élément mobile (830) sur la base d'informations de définition de pression de l'élément mobile (830) ;
une unité de définition de condition (720) configurée pour régler une condition de définition d'une position de l'élément mobile (830) sur la base des informations de définition de position ; et
un dispositif de gestion (5) configuré pour transmettre les informations de définition de position à une machine de moulage par injection (10).

5. Le système de moulage par injection (1) selon la revendication 4,
dans lequel les informations de définition de pression sont des informations de définition de pression d'un premier élément mobile (330),
les informations de définition de position sont des informations de définition de position d'un second élément mobile (100, 200) basées sur les informations de définition de pression du premier élément mobile (330), et
l'unité de définition de condition (720) définit une condition de définition d'une position du second élément mobile (100, 200) sur la base des informations de définition de position.

6. Le système de moulage par injection (1) selon la revendication 4 ou 5,
dans lequel le dispositif de gestion (5) inclut une unité d'analyse (22) qui analyse les informations de définition de pression et délivre en sortie les informations de définition de position.

7. Le système de moulage par injection (1) selon la revendication 4 ou 5,
dans lequel le dispositif de gestion (5) inclut une unité d'analyse (22) qui analyse les informations de résultat réel de pression indiquant une pression détectée lorsqu'un produit de moulage est moulé et délivre en sortie les informations de définition de position.

8. Le système de moulage par injection (1) selon la revendication 6 ou 7,
dans lequel l'unité d'analyse (22) corrige les informations de définition de position sur la base d'informations de résultat réel de pression indiquant une pression détectée lorsqu'un produit de moulage est moulé et des informations de définition de pression, et
l'unité de réception (710) reçoit les informations de définition de position corrigées.
